(19) **Europäisches Patentamt**
**European Patent Office**
**Office européen des brevets**

(11) **EP 2 401 632 B1**

(12) **EUROPÄISCHE PATENTSCHRIFT**

(45) Veröffentlichungstag und Bekanntmachung des Hinweises auf die Patenterteilung:
**19.06.2013 Patentblatt 2013/25**

(51) Int Cl.:
***G01S 7/40*** *(2006.01)* ***G01S 13/93*** *(2006.01)*

(21) Anmeldenummer: **09801715.5**

(22) Anmeldetag: **28.12.2009**

(86) Internationale Anmeldenummer:
**PCT/EP2009/067942**

(87) Internationale Veröffentlichungsnummer:
**WO 2010/097137 (02.09.2010 Gazette 2010/35)**

(54) **VERFAHREN ZUR DETEKTION VON EMPFINDLICHKEITSEINBUSSEN EINES FMCW-RADARORTUNGSGERÄTES DURCH DIFFUSE VERLUSTQUELLEN**

METHOD FOR DETECTING LOSS OF SENSITIVITY OF A FMCW RADAR LOCATING DEVICE BY DIFFUSE SOURCES OF LOSS

PROCÉDÉ DE DÉTECTION DE PERTES DE SENSIBILITÉ D'UN APPAREIL DE LOCALISATION RADAR FM-CW PAR DES SOURCES DE PERTES DIFFUSES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.02.2009 DE 102009001239**

(43) Veröffentlichungstag der Anmeldung:
**04.01.2012 Patentblatt 2012/01**

(73) Patentinhaber: **Robert Bosch GmbH**
**70442 Stuttgart (DE)**

(72) Erfinder:
• **HEILMANN, Stefan**
**71229 Leonberg (DE)**
• **KUEHNLE, Goetz**
**71282 Hemmingen (DE)**
• **BECHLER, Dirk**
**76185 Karlsruhe (DE)**

(56) Entgegenhaltungen:
WO-A1-2005/062072 DE-A1- 19 803 660
DE-A1- 19 945 268 DE-A1-102006 054 320
DE-A1-102008 002 220 JP-A- 10 048 333

**Beschreibung**

Stand der Technik

Die Erfindung betrifft ein Verfahren zur Detektion von Empfindlichkeitseinbußen eines FMCW-Radarortungsgerätes durch diffuse Verlustverursacher, bei dem vom Radarortungsgerät ein Sendesignal emittiert wird, dessen Frequenz periodisch in aufeinanderfolgenden Modulationsrampen moduliert wird, und mindestens ein Leistungsmerkmal mindestens eines Frequenzanteils eines vom Radarortungsgerät empfangenen Signals ausgewertet wird.

Ein solches Verfahren ist aus JP 10 048333 A bekannt.

FMCW-Radarortungsgeräte werden häutig in Fahrerassistenzsystemen für Kraftfahrzeuge eingesetzt, beispielsweise für eine automatische Abstandsregelung oder zur frühzeitigen Erkennung einer Kollisionsgefahr. Ein Radom, das die Antenne abdeckt und zumeist durch eine Radarlinse gebildet wird, ist dabei in besonders hohem Maße den Witterungseinflüssen und dem Straßenschmutz ausgesetzt, so daß es leicht zur Bildung eines verlustbehafteten, reflektierenden dielektrischen Belages (Schmutz- oder Wasserfilm) auf der Oberfläche des Radoms kommen kann.

Hierdurch wird die Sende- und Empfangsleistung des Radarsensors beträchtlich reduziert, so daß die Ortungstiefe und Ortungszuverlässigkeit erheblich eingeschränkt wird, bis hin zur völligen Erblindung des Radarsensors. Beispielsweise hat bei einer Radarfrequenz von 76,5 GHz schon ein Wasserfilm mit einer Dicke von 0,3 mm auf dem Radom zur Folge, daß etwa 50 % der ausgestrahlten Leistung an diesem Wasserfilm reflektiert wird und etwa 90 % der Restleistung durch Absorption gedämpft werden.

Ein Belag auf dem Radom ist daher ein Beispiel für einen "diffusen Verlustverursacher", durch den die Empfindlichkeit des Radarortungssystems erheblich beeinträchtigt werden kann.

Ein weiteres Beispiel für einen diffusen Verlustverursacher ist Niederschlag in der Form von Regen, Gischt, Schnee oder Hagel, der einen Teil der emittierten Radarstrahlung reflektiert und so eine Verringerung der Reichweite der Radarstrahlung und damit eine Verringerung der Ortungstiefe des Radarsensors verursacht.

Aus Gründen der Verkehrssicherheit ist es wesentlich, daß eine Erblindung oder Einschränkung der Funktion des Radarortungsgerätes möglichst unverzüglich festgestellt werden kann.

Aus DE 199 45 268 A1 ist ein Verfahren der eingangs genannten Art bekannt, bei dem eine Erblindung des Radar-Ortungsgerätes durch Überprüfung einer Vielzahl von Kriterien festgestellt werden soll. Eines der Kriterien beruht auf einer Bewertung der mittleren Leistung der vom Radarortungsgerät empfangenen Signale. Ein Nachteil dieses Verfahrens besteht jedoch darin, daß die mittlere Leistung nicht nur vom Vorhandensein von diffusen Verlustverursachern abhängig ist, sondern auch von einer Vielzahl anderer Faktoren, u.a. von spezifischen Eigenschaften des jeweiligen Radarsensors, Montage- und Verbautoleranzen des Radarsensors beim Einbau in das Kraftfahrzeug und insbesondere von Temperatur- und Alterungseinflüssen.

DE 10 2006 054 320 A1 beschreibt ein Verfahren zur Detektion von Niederschlag, das ebenfalls auf der Auswertung eines Leistungsmerkmals des empfangenen Radarsignals beruht und im folgenden kurz erläutert werden soll.

Das Funktionsprinzip eines FMCW-Radarortungsgerätes (Frequency Modulated Continuos Wave) besteht darin, daß das Radarsignal kontinuierlich ausgesendet wird, jedoch die Frequenz dieses Signals periodisch mit steigenden und fallenden Rampen moduliert wird (der Bergriff "Rampe" soll hier nicht bedeuten, daß die Frequenzmoduation innerhalb der "Rampe" zwingend linear sein muß). Der Mischer mischt einen Teil des Sendesignals mit dem von der Antenne empfangenen Signal und erzeugt so ein Mischprodukt, dessen Frequenz der Differenz zwischen der Frequenz des aktuellen Sendesignals und der Frequenz des empfangen Signals entspricht.

Wenn ein Radarecho von einem georteten Objekt empfangen wird, ist somit die Frequenz des Mischprodukts von der Signallaufzeit und damit vom Abstand des Objekts abhängig, aber aufgrund des Dopplereffektes auch von der Relativgeschwindigkeit des reflektierenden Objekts. Jedes geortete Objekt zeichnet sich deshalb im Spektrum, dem Mischprodukt gebildet wird, auf jeder Modulationsrampe als ein Peak bei der vom Abstand und der Relativgeschwindigkeit abhängigen Frequenz ab. Durch Vergleich der Frequenzlagen von Peaks, die von demselben Objekt stammen, auf Modulationsrampen mit unterschiedlicher Steigung lassen sich dann der Abstand und die Relativgeschwindigkeit des Objekts bestimmen.

Auch Regentropfen oder aufspritzende Gischt stellen in diesem Sinne "Objekte" dar, die bei nicht zu großen Abständen vom Radarsensor, beispielsweise bei Abständen bis zu etwa 10 - 50 m, einen schwachen aber immerhin noch detektierbaren Peak im Spektrum hinterlassen. Bei stärkerem Niederschlag addieren sich diese Peaks in dem Frequenzbereich, der dem oben genannten Abstandsbereich entspricht (die Relativgeschwindigkeit der Regentropfen ind radialer Richtung bei Elevation 0° kann zumeist vernachlässigt werden), zu einem Untergrundsignal, dem sogenannten Regenclutter. Die Leistung dieses Regenclutters ist somit ein Maß für das Vorhandensein und die Stärke von Niederschlag.

Wenn sich allerdings im Ortungsbereich des Radarsensors auch "echte" Objekte wie beispielsweise vorausfahrende Fahrzeuge befinden, die im Spektrum einen wesentlich ausgeprägteren Peak hervorrufen, so muß die in diesem Peak steckende Leistung bei der Bewertung der Leistung des Regenclutters ausgenommen werden.

Wenn jedoch eine große Anzahl echter Objekte in unterschiedlichen Abständen geortet werden, wie es beispielsweise bei Gassen- oder Tunnelfahrten oder bei Fahrten direkt neben einem Lkw vorkommen kann, so sind die entsprechenden Objektpeaks so dicht im Spektrum verteilt, daß es zu einer Anhebung der Detektionsschwelle kommt, mit der Folge, daß keine sichere Unterscheidung zwischen den Objekten und dem Regenclutter mehr möglich ist. Darüber hinaus ist auch die Leistungsfähigkeit dieses Verfahrens durch Störfaktoren wie Verbautoleranzen, Temperatur und Alterung eingeschränkt.

Offenbarung der Erfindung

Aufgabe der Erfindung ist es, ein Verfahren zur Detektion von diffusen Verlustverursachern anzugeben, das robuster gegenüber solchen Störeinflüssen ist.

Diese Aufgabe wird erfindungsgemäß dadurch gelöst, daß die Leistung des Sendesignals zyklisch, jeweils nach Vollendung einer Modulationsrampe variiert wird und die Empfindlichkeitseinbuße anhand von Unterschieden in den Leistungmerkmalen von Signalen bestimmt wird, die bei aufeinanderfolgenden Modulationsrampen empfangen werden, wobei das mindestens eine Leistungsmerkmal eines der folgenden Merkmale ist: Signalleistung der von georteten Objekten erzeugten Radarechos, Rauschleistung, Verhältnis zwischen Signalleistung und Rauschleistung, Varianz des durch die Änderung der Sendeleistung verursachten Signalleistungsunterschieds.

Wenn die Leistung des Sendesignals variiert wird, so wird generell auch eine entsprechende Abnahme in der Leistung des empfangenen Signals zu verzeichnen sein. Es zeigt sich jedoch, daß die diffusen Verlustverursacher nicht nur die absolute Leistung des empfangenen Signals beeinflussen, sondern auch Auswirkungen auf die Art und Weise haben, wie die Leistung des empfangenen Signals auf Änderungen der Sendeleistung reagiert. Dabei sind generell die Reaktionen des empfangenen Signals auf Änderungen der Sendeleistung gegenüber den oben genannten Störeinflüssen weniger anfällig als die absoluten Änderungen der Leistungsmerkmale selbst.

Die Auswahl und genaue Definition der spezifischen Leistungsmerkmale, die für die Auswertung nach dem erfindungsgemäßen Verfahren herangezogen werden, ist dabei von der Art des jeweils zu detektierenden diffusen Verlustverursachers abhängig.

Vorteile der Erfindung

Das erfindungsgemäße Verfahren ermöglicht sowohl bei der Detektion eines Radombelages wie auch bei der Detektion von Niederschlag eine größere Unempfindlichkeit gegenüber Temperatur- und Alterungseinflüssen sowie Einflüssen von Verbautoleranzen und des Einbauortes des Sensors sowie von spezifischen Merkmalen des benutzten Sensors, so daß insgesamt eine verbesserte Robustheit und Serientauglichkeit erreicht wird. Bei der Detektion von Niederschlag wird darüber hinaus auch eine größere Robustheit des Verfahrens in Szenarien mit hoher Objektdichte erreicht.

Vorteilhafte Ausgestaltungen und Weiterbildungen der Erfindung sind in den Unteransprüchen angegeben.

In einer anderen Ausführungsform, die sich besonders zur Detektion von Niederschlag eignet, handelt es sich bei dem untersuchten Leistungsmerkmal um die Signalleistung (spezieller: das Leistungsmaximum der Objektpeaks), und es wird insbesondere die Varianz des durch Änderung der Sendeleistung verursachten Signalleitungsunterschieds untersucht.

Kurze Beschreibung der Zeichnungen

Ausführungsbeispiele der Erfindung sind in den Zeichnungen dargestellt und in der nachfolgenden Beschreibung näher erläutert.

Es zeigen:

Fig. 1          ein Blockdiagramm eines Radarortungsgerätes, mit dem das erfindungsgemäße Verfahren ausführbar ist;

Fig. 2          ein Frequenz-/Zeit-Diagramm eines Sendesignals;

Fig. 3          ein Leistungs-/Zeit-Diagramm des Sendesignals;

Fig. 4 und 5          Spektren von Objektortungssignalen bei unterschiedlichen Sendeleistungen;

Fig. 6          eine Prinzipskizze zur Detektion von Niederschlag;

Fig. 7          eine Graphik zur Definition des Begriffes "Signalleistungsunterschied";

Fig. 8          ein Zeitdiagramm für Messungen des Signalleistungsunterschieds unter niederschlagsfreien Bedingungen;

Fig. 9          ein Zeitdiagramm für Messungen des Signalleistungsunterschieds bei Niederschlag; und

Fig. 10 und 11   Diagramme der Varianzen der Signalleistungsunterschiede in Fig. 8 und 9.

Ausführungsformen der Erfindung

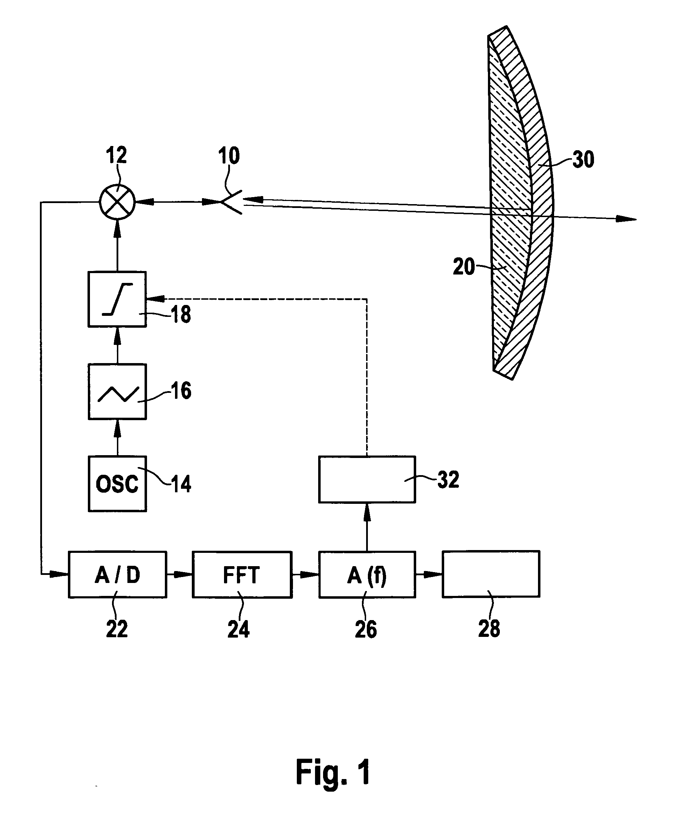

Das in Fig. 1 gezeigte Radarortungsgerät weist eine Antenne 10 auf, der über einen Mischer 12 ein von einem Oszillator 14 erzeugtes und von einem Modulator 16 frequenzmoduliertes Sendesignal zugeführt wird. Außerdem ist in Fig. 1 symbolisch ein Verstärker 18 gezeigt, mit dem die Leistung des Sendesignals variiert werden kann. Diese Leistungsvariation kann in der Praxis jedoch auch im Oszillator oder im Modulator erfolgen. Das von der Antenne 10 emittierte Signal wird von einer Radarlinse gebündelt, die hier zugleich ein Radom 20 zur Abdeckung der Antenne und damit zum Schutz der Antenne gegen Witterungseinflüsse bildet.

Wenn von dem Radarortungsgerät ein (nicht gezeigtes) Objekt geortet wird, so wird das an dem Objekt reflektierte Signal durch die Linse wieder auf dieselbe Antenne 10 gebündelt, die das Sendesignal emittiert hat (monostatisches Antennenkonzept). Im Mischer 12 wird das empfangene Signal mit einem Anteil des Sendesignals gemischt, und als Mischprodukt erhält man ein zeitabhängiges Signal (Zwischenfrequenzsignal), das in einer Analog/Digital-Wandlerstufe 22 gesampled und digitalisiert wird. In einer Transformationsstufe 24 wird das digitalisierte Signal beispielsweise durch Schnelle Fourier Transformation (FFT) in ein Spektrum 26 umgewandelt, das die Abhängigkeit der Amplitude des Mischprodukts von der Frequenz f angibt. In einer Auswertungsstufe 28 wird dieses Spektrum weiter ausgewertet, um die Abstände und Relativgeschwindgkeiten der georteten Objekte und - bei einem Mehrstrahlradar - auch deren Azimutwinkel zu bestimmen.

Auf der Oberfläche des Radoms 20 ist in Fig. 1 übertrieben ein Belag 30 dargestellt, beispielsweise ein Wasserfilm oder Schmutzfilm, der einen Teil der von der Antenne 10 emittierten Radarstrahlung reflektiert und einen weiteren Teil der durchgelassenen Radarstrahlung absorbiert. Durch den Belag 30 kann somit die Empfindlichkeit des Radarortungsgerätes beträchtlich herabgesetzt werden, bis hin zur völligen Erblindung.

Das Radarortungsgerät weist deshalb eine Detektionseinrichtung 32 auf, die es erlaubt, das Vorhandensein des reflektierenden Belages 30 festzustellen und die Reflektivität dieses Belages quantitativ zu bewerten. Zu diesem Zweck wertet die Detektionseinrichtung 32 das Spektrum 26 aus, wie im folgenden näher beschrieben wird.

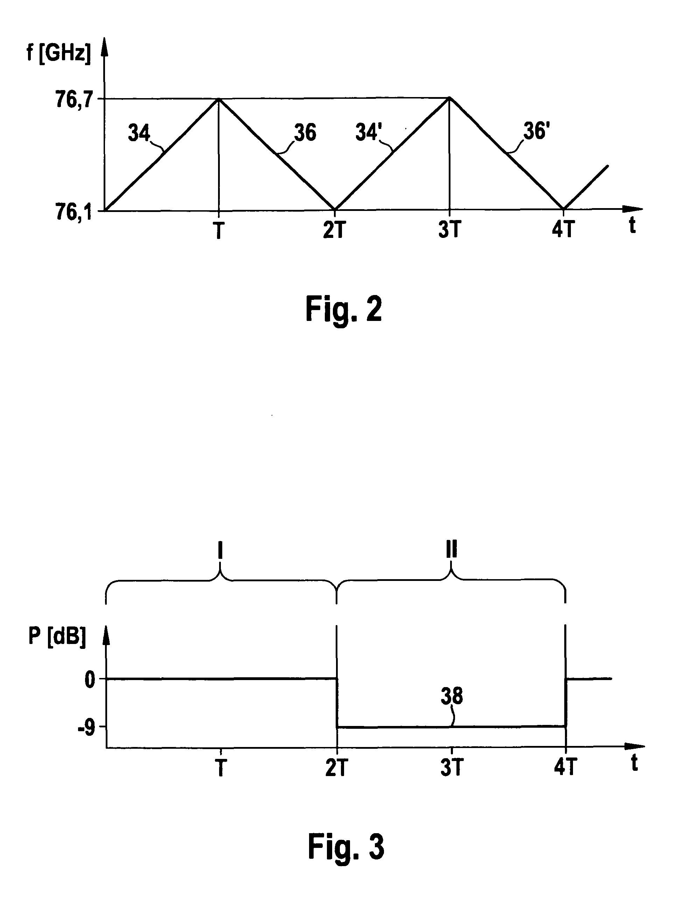

Das Sendesignal wird vom Modulator 16 rampenförmig moduliert, mit einer abwechselnden Folge von steigenden und fallenden Modulationsrampen 34, 36, 34' und 36', wie sie in Fig. 2 gezeigt sind. Diese Modulationsrampen haben jeweils eine Dauer T (z. B. 2 ms) und einem Modulationshub von z. B. 0,6 GHz.

Die Modulationsrampen 34 und 34' haben eine identische Modulation (gleiche Steigung und Dauer der Modulationsrampe), und entsprechendes gilt auch für die Modulationsrampen 36 und 36'. Der Verstärker 18 wird jedoch durch die Detektionseinrichtung 32 so angesteuert, daß das Sendesignal auf den Rampen 34' und 36' mit einer geringeren Sendeleistung emittiert wird als auf den Rampen 34 und 36. Dies ist in Fig. 3 gezeigt, wo die Rampen 34 und 36 zu einer Periode I und die Rampen 34', 36' zu einer Periode II zusammengefaßt sind. Die Kurve 38 in Fig. 3 läßt erkennen, daß die Sendeleistung während der Periode II gegenüber der Periode I um 9 dB herabgesetzt ist. Dieses Schema wird entsprechend in den nachfolgenden Perioden zyklisch wiederholt.

In einer Anderen Ausführungsform können die Modulationsrampen auch in der Reihenfolge 34-34'-36-36' gefahren werden. Die Sendeleistung wechselt dann nach jeder einzelnen Modulationsrampe. Das hat den Vorteil daß der Einfluß der Dynamik "echter" Objekte (PKW, LKW) stärker unterdrückt wird.

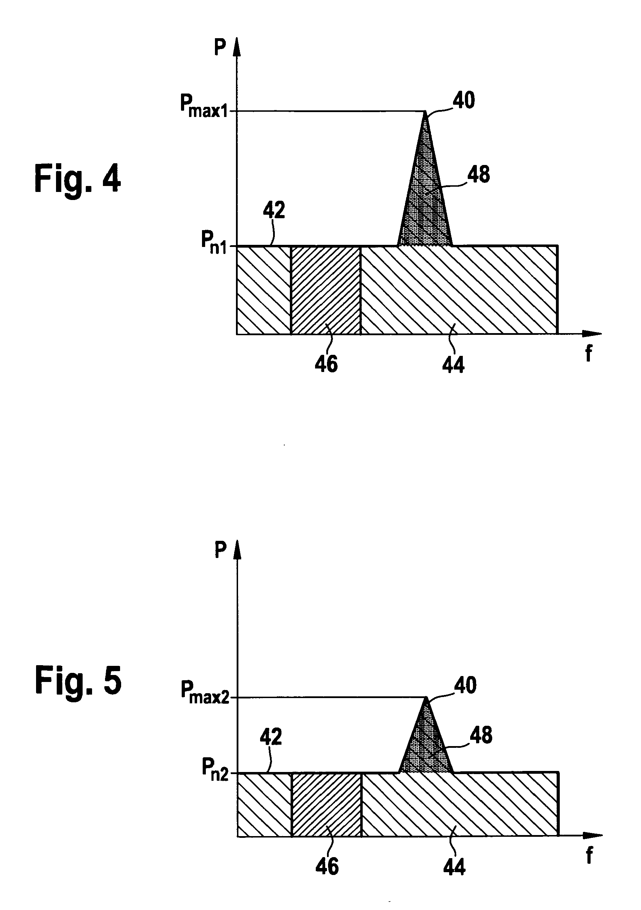

Das Spektrum 26 wird für jede der Modulationsrampen 34, 36, 34' und 36' neu aufgenommen, so daß man innerhalb jeder Periode (I oder II) zwei Spektren erhält, Fig 4 zeigt als Beispiel ein Spektrum, das auf der Modulationsrampe 34 erhalten wird, wenn sich ein einzelnes Objekt im Ortungsbereich des Radarsensors befindet. Dieses Objekt ist im Spektrum als ein Peak 40 zu erkennen, der sich deutlich vom Rauschuntergrund 42 abhebt. Die Leistung des empfangenen Signals am Scheitel des Peaks 40 hat den Wert $P_{max1}$, während der Rauschpegel, der hier vereinfachend als frequenzunabhängig angenommen wird, den Wert $Pn_1$ hat.

Fig. 5 zeigt das Spektrum, das in derselben Situation im unmittelbar nachfolgenden Zyklus (Zyklus II) auf der Modulationsrampe 34' aufgenommen wurde. Aufgrund der verringerten Sendeleistung haben sowohl die Scheitelhöhe des Peaks 40 als auch der Rauschpegel abgenommen, auf die Werte $P_{max2}$ bzw. $P_{n2}$. Die Verringerung der Sendeleistung führt jedoch nicht nur zu einer proportionalen Abnahme der empfangenen Leistung auf dem gesamten Frequenzbereich des Spektrums, sondern führt mit zunehmender Dicke des Belages 30 auf dem Radom auch dazu, daß der Peak 40 mehr und mehr "im Rauschen untergeht", d. h., es kommt zu einer Verschlechterung des Signal-/Rausch-Verhältnisses.

Um diese Reaktion des empfangenen Signals auf die Änderung der Sendeleistung zu quantifizieren, wird im gezeigten Beispiel für jedes der beiden Spektren nach Fig. 4 und 5 die insgesamt empfangene Sendeleistung wird über über einen relativ großen Teilbereich dieses Spektrums (jedoch mit Ausnahme des extremen Nahbereiches) integriert. Die so erhaltene Gesamtleistung $P_{tot1}$ wird in Fig. 4 durch die grob schraffiert eingezeichnete Fläche 44 repräsentiert. Der Index "1" in $P_{tot1}$ gibt die Periode an, in der sich die Modulationsrampe befindet, für das Spektrum aufgenommen wurde, hier also die Periode I. Entsprechend repräsentiert die Fläche 44 in Fig. 5 die Gesamtleistung $P_{tot2}$ auf der Modulationsrampe 34' in der Periode II. Weiterhin wird in beiden Spektren die mittlere Rauschleistung $P_{N1}$ bzw. $P_{N2}$ bestimmt. Dazu wird im Spektrum über einen bestimmten, kleineren Frequenzbereich integriert, innerhalb dessen sich kein Peak befindet. Dieser Bereich wird in Fig. 4 und 5 jeweils durch die fein schraffiert eingezeichnete Fläche 46 angegeben. Die mittlere Rauschleistung $P_{N1}$ bzw. $P_{N2}$ erhält man dann, indem man das der Fläche 46 entsprechende Integral auf den gesamten Frequenzbereich normiert, über den auch bei der Berechnung von $P_{tot1}$ und $P_{tot2}$ integriert wurde.

Die oben beschriebene Bestimmung von $P_{N1}$ bzw. $P_{N2}$ braucht nicht ständig während der Fahrt zu erfolgen. Es genügt, wenn diese Werte einmal vor Inbetriebnahme des Radarsensors werkseitig gemessen werden.

Subtrahiert man von der Gesamtleistung $P_{tot1}$ bzw. $P_{tot2}$ die jeweilige mittlere Rauschleistung $P_{N1}$ bzw. $P_{N2}$, so erhält man die Signalleistungen $P_{S1}$ und $P_{S2}$, d.h., die Leistungen, die speziell auf die Peaks 40 entfallen, die sich über den Rauschpegel 42 erheben, in Fig. 4 und 5 symbolisiert durch dunkler unterlegte Flächen 48.

Durch einmalige Vermessung des Radarortungsgerätes vor dem Einbau in das Fahrzeug oder durch eine Lernphase während des Fahrbetriebs können nun die Rauschpegel und damit die mittleren Rauschleistungen $P_{N1}$ und $P_{N2}$ bestimmt werden. Damit läßt sich auch das Verhältnis a zwischen diesen Rauschleistungen bestimmen, das definiert ist durch die Gleichung

$$P_{N1} = a\, P_{N2} \qquad\qquad (1)$$

Eine entsprechende Beziehung läßt sich auch zwischen den Signalleistungen aufstellen:

$$P_{S1} = b\, P_{S2} \qquad\qquad (2)$$

In Abwesenheit von diffusen Verlusten, also bei belagfreiem Radom, ist der Faktor b eine Sensoreigenschaft und somit bekannt oder ggf. während der Fahrt zu lernen. Das Verhältnis der Sendeleistungen wird so gewählt, daß die Bedingung

$$a \neq b \qquad\qquad (3)$$

erfüllt ist.

Unter dieser Bedingung gibt es nun verschiedene Möglichkeiten, aus den Leistungsmerkmalen der empfangenen Signale ein Maß für die Empfindlichkeitseinbußen zu berechnen, die durch den Belag 30 auf dem Radom verursacht werden.

Eine erste Möglichkeit besteht darin, das Verhältnis der Gesamtleistungen auszuwerten:

$$P_{tot1}/P_{tot2} = (P_{S1} + P_{N1})/(P_{S2} + P_{N2}) = (b\, P_{S2} + a\, P_{N2})/(P_{S2} + P_{N2}) \qquad (4)$$

In Abwesenheit von diffusen Verlusten, insbesondere in Abwesenheit eines Radombelages wird das Signal/Rausch-Verhältnis sowohl in der Periode I als auch in der Periode II sehr hoch sein ($P_{S1} \gg P_{N1}$ und $P_{S2} \gg PN_2$), und das Gesamtleistungsverhältnis in Gleichung (4) wird nahe bei dem Wert b liegen. Mit zunehmender Erblindung des Ortungsgerätes verschlechtert sich das Signal-/RauschVerhältnis, und bei völliger Erblindung ($P_{S2} = 0$) nimmt das Verhältnis in Gleichung (4) schließlich den Wert a an.

Das Verhältnis $R := P_{tot1}/P_{tot2}$ liefert somit einen Indikator für die Empfindlichkeit des Radar-Ortungsgerätes. Beispielsweise läßt sich ein Güteparameter Q definieren:

$$Q := |R - a|/|b - a| \tag{5}$$

Der Parameter Q variiert zwischen 0 und 1, wobei ein Wert nahe bei 1 eine hohe Empfindlichkeit und ein Wert null völlige Erblindung des Ortungsgerätes anzeigt. Wenn der Parameter Q dauerhaft unterhalb eines bestimmten Schwellenwertes liegt oder nach geeigneter zeitlicher Filterung einen solchen Schwellenwert unterschreitet, kann deshalb die Detektionseinrichtung 32 ein Signal ausgeben, das die Erblindung des Ortungsgerätes anzeigt.

Eine zweite Möglichkeit, ein Maß für die Erblindung des Ortungsgerätes zu gewinnen, besteht in der Bestimmung des relativen Leistungsverhältnisses zwischen Signal- und Rauschleistung, also der Auswertung der Quotienten $P_{S1}/P_{N1}$ und $P_{S2}/P_{N2}$.

Aus Gleichungen (1) und (2) folgt

$$P_{N1} = a \cdot (b \cdot P_{tot2} - P_{tot1})/(b-a) \tag{6}$$

$$P_{S1} = b \cdot (P_{tot1} - a \cdot P_{tot2})/(b-a) \tag{7}$$

Für die Leistungsverhältnisse folgt daraus

$$P_{S1}/P_{N1} = (b/a) * [(P_{tot1} - a \cdot P_{tot2})/(b \cdot P_{tot2} - P_{tot1})] \tag{8}$$

$$P_{S2}/P_{N2} = [(P_{tot1} - a \cdot P_{tot2})/(b \cdot P_{tot2} - P_{tot1})] \tag{9}$$

Wenn der Sensor nicht blind ist ($P_{S1} \neq 0$ und $P_{S2} \neq 0$), sind auch die beiden Leistungsverhältnisse in Gleichung (8) und (9) beide von null verschieden, und sie unterscheiden sich um den Faktor b/a. Im Fall der Erblindung werden dagegen beide Leistungsverhältnisse zu null.

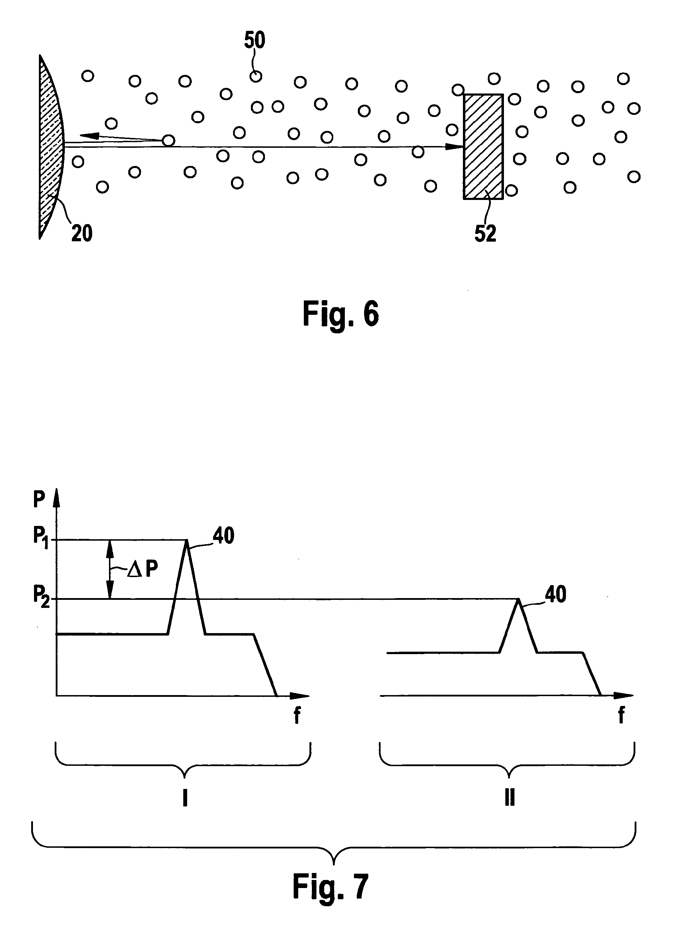

Die Detektionseinrichtung 32 in Fig. 1 ist auch in der Lage, Beeinträchtigungen der Empfindlichkeit des Radar-Ortungssystems zu detektieren, die nicht durch einen Belag auf dem Radom 20, sondern durch Niederschlag (Regen) oder aufspritzende Gischt verursacht werden. Fig. 6 illustriert den Effekt von Regentropfen 50 in einer Zone zwischen dem Radom 20 des Radarortungsgerätes und einem georteten Objekt 52. Wie durch Pfeile symbolisiert wird, wird die Radarstrahlung nicht nur am Objekt 52 reflektiert, sondern auch an den einzelnen Regentropfen 50, was zu einer Schwächung des Signals führt, das das Objekt 52 und nach Reflexion wieder den Radarsensor erreicht.

Auch das Verfahren zur Detektion des Niederschlags beruht auf einer Variation der Sendeleistung in aufeinanderfolgenden Modulationsrampen.

Ähnlich wie Fig. 4 und 5 zeigt Fig. 7 Spektren, die in zwei aufeinanderfolgenden Modulationsrampen mit identischer Modulation, beispielsweise den Modulationsrampen 34 und 34' gewonnen wurden. Als Beispiel wurde wieder angenommen, daß sich im Ortungsbereich ein einzelnes Objekt befindet, das im Spektrum als ein Peak 40 zu erkennen ist. In der Periode I (links in Fig. 7) hat der Peak 40 bei der Scheitelfrequenz die maximale Signalleistung $P_1$. In der Periode II (rechts in Fig. 7) hat er dagegen aufgrund der Absenkung der Sendeleistung nur die kleinere maximale Signalleistung $P_2$. Wenn kein Niederschlag und keine sonstigen diffusen Verluste vorhanden sind, sollte die Differenz $\Delta P$ zwischen den Signalleistungen P1 und P2 nur von der Leistungsabsenkung abhängig sein und daher einen im wesentlichen konstant Wert behalten, wenn das betreffende Objekt über mehrere aufeinanderfolgende Zyklen oder, genauer, Zykluspaare mit abwechselnd erhöhter und abgesenkter Sendeleistung, verfolgt wird. Diese Annahme ist deshalb gerechtfertigt, weil die Dauer eines einzelnen Zyklus in der Praxis beispielsweise nur 4 ms beträgt und ein reales Objekt wie etwa ein vorausfahrendes Fahrzeug eine verhältnismäßig geringe Dynamik aufweist, so daß sich an der Scheitelhöhe des Peaks 40 innerhalb eines Zeitraums von einigen Millisekunden oder einigen 10 Millisekunden praktisch nichts ändern sollte.

Anders verhält es sich hingegen bei Niederschlag. Jeder der Tropfen 50 in Fig. 6 wirkt wie ein kleines Reflexionsziel oder Objekt, das einen kleinen Peak im Spektrum nach Fig 7 hinterläßt. Diese Peaks sind über ein breites Frequenzband verstreut und tragen als sogenannter Regenclutter zum Untergrund der Spektren in Fig. 7 bei, allerdings nur bis zu einer bestimmten Frequenzgrenze, die dem größten Abstand entspricht, in dem noch ein Radarecho von den einzelnen Regentropfen nachweisbar ist (in der Praxis ca. 10 m). Unterhalb dieser Frequenzgrenze führt der Regenclutter aufgrund der hohen vertikalen Dynamik der Regentropfen zu starken Signalfluktuationen.

Allerdings sind diese Fluktuationen als solche kein geeignetes Maß für das Vorhandensein von Niederschlag, weil sie nicht nur von dem Niederschlag, sondern beispielsweise auch von der Reflexionsstärke des betreffenden Objekts 52 abhängig sind.

Betrachtet man dagegen den Signalleistungsunterschied $\Delta P$, so sollte dieser in Abwesenheit von Niederschlag im wesentlichen konstant sein. Die hohe relative Dynamik der Regentropfen 50 in vertikaler Richtung im Nahbereich führt jedoch auch schon in dem Zeitintervall von 4 ms, das zwischen den Modulationsrampen 34 und 34' liegt, zu einer deutlichen statistischen Schwankung des Signalleistungsunterschiedes $\Delta P$. Die Streuung oder Varianz des Signalleistungsunterschiedes $\Delta P$ ist deshalb ein geeignetes Maß für das Vorhandensein von Niederschlag.

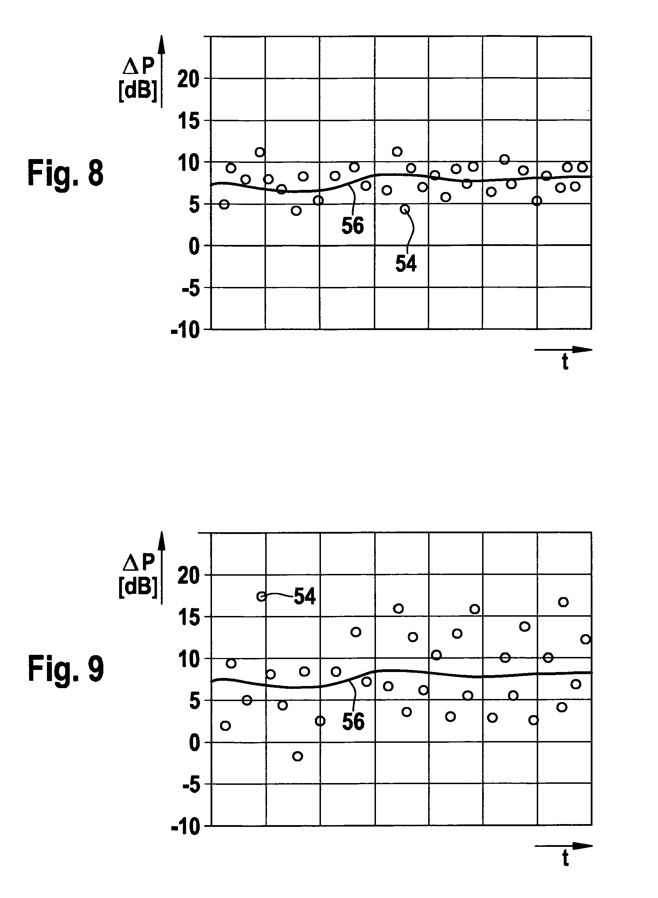

Fig. 8 bis 11 illustrieren Ergebnisse von Versuchsmessungen, die diesen Effekt verdeutlichen.

Die Versuchsmessungen erstreckten sich jeweils über einen Zeitraum von etwa 10 Minuten. In Fig. 8 sind die Ergebnisse einiger Einzelmessungen des Signalleistungsunterschiedes $\Delta P$ innerhalb dieses Zeitraums gegen die Zeit t aufgetragen. Jede Einzelmessung wird dabei durch einen Meßpunkt 54 repräsentiert, der den Signalleistungsunterschied $\Delta P$ zwischen zwei aufeinanderfolgenden Zyklen angibt. Die Kurve 56 in Fig. 8 gibt den durch Teifpaßfilterung der Einzelmessungen (mit geeigneter Zeitkonstante) gebildeten Mittelwert an.

Die in Fig 8 illustrierten Ergebnisse wurden bei einer Trockenmessung aufgenommen, d.h., es wurde nur das Objekt 52 detektiert und es war kein Niederschlag vorhanden.

Fig. 9 zeigt dagegen die entsprechenden Ergebnisse für eine Messung in Anwesenheit von Niederschlag. Man erkennt, daß der Niederschlag auf den mittleren Signalleistungsunterschied (Kurve 56) praktisch keinen Einfluß hat, aber zu einer deutlich stärkeren Streuung der durch die Meßpunkte 54 symbolisierten Einzelmessungen führt. Diese Streuung oder Varianz bildet daher ein brauchbares Maß für die Detektion von Niederschlag und die quantitative Bestimmung der Niederschlagsstärke.

Betrachtet man eine Folge von aufeinanderfolgenden Einzelmessungen, in der k den Index der Einzelmessungen angibt, so kann die Varianz beispielsweise nach folgender Formel bestimmt werden:

$$\sigma_k{}^2 = a \, (\Delta P_k - AVE \, (\Delta P_k))^2 + (1-a) \cdot \sigma_{k-1}{}^2 \qquad (10)$$

Darin ist:

$\sigma_k{}^2$      die geschätzte Varianz des Signalleistungsunterschieds bei der Einzelmessung k,

a      ein Filterkoeffizient,

$\Delta P_k$      das Resultat der aktuellen Einzelmessung und

$AVE \, (\Delta P_k)$      der geschätzte Mittelwert des Signalleistungsunterschieds bei der Einzelmessung k.

Als geschätzter Mittelwert $AVE((\Delta P_k)$ kann der tiefpaßgefilterte Wert verwendet werden, der durch die Kurve 56 in Fig. 8 und 9 angegeben wird. Ein geeigneter Wert für den Filterkoeffizienten a ist beispielsweise 0,05.

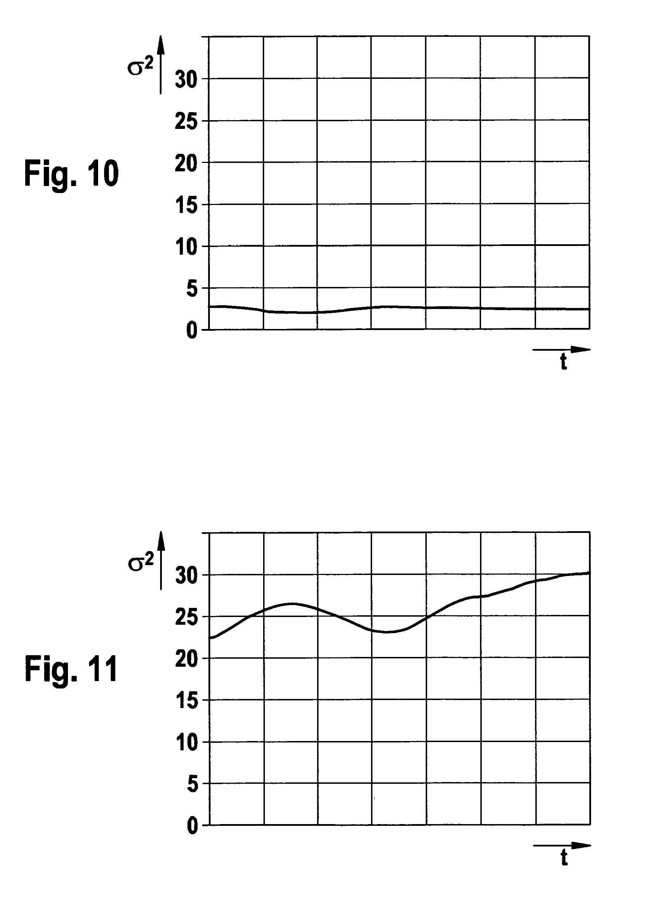

Fig. 10 und 11 zeigen den zeitlichen Verlauf der Varianz $\sigma^2$ gemäß Formel (10) für die Trockenmessung entsprechend Fig. 8 bzw. die Messung bei Niederschlag entsprechend Fig. 9. Man erkennt, daß sich bei der Regenmessung gemäß Fig. 11 die Varianz sehr schnell auf ein Niveau einpendelt, das deutlich über dem Niveau der Varianz für eine Trockenmessung (Fig. 10) liegt.

Wenn die Varianz $\sigma^2$ einen geeigneten Schwellenwert überschreitet, kann die Detektionseinrichtung 32 ein Signal ausgeben, das Starkniederschlag und eine entsprechende Beeinträchtigung der Empfindlichkeit des Radarsensors anzeigt.

Der Vorteil des hier beschriebenen Verfahrens besteht darin, daß die Detektion von Niederschlag auch und gerade in Gegenwart von ausgedehnten Objektes 52 wie vorausfahrenden Fahrzeugen und dergleichen möglich ist. Auch eine hohe Objektdichte schränkt die Anwendbarkeit dieses Verfahrens nicht ein.

Wesentlich bei allen hier beschriebenen Ausführungsbeispielen ist, daß die Leistung des Sendesignals zyklisch variiert wird und daß für die Erkennung der Empfindlichkeitseinbuße Leistungsmerkmale gewählt werden, die empfindlich auf die Änderung der Sendeleistung reagieren aber weniger empfindlich auf Störfaktoren wie Temperatur oder Alterung des Radarsensors und dergleichen reagieren. Die Auswertung der Leistungsmerkmale sollte vorzugsweise für Modulationsrampen erfolgen, bei denen die Sendeleistung unterschiedlich war, die jedoch zeitlich möglichst wenig auseinanderliegen, so daß die Dynamik von georteten Objekten praktisch noch keinen Einfluß auf die Leistungsmerkmale haben kann.

Wenn beispielsweise ein Meßzyklus zwei oder mehr unterschiedliche Modulationsrampen umfaßt, ist es zweckmäßig, die Sendeleistung nach jedem Meßzyklus zu verändern.

Während gemäß Fig. 3 nur ein Wechsel zwischen zwei Sendeleistungsniveaus erfolgt, ist im allgemeinen auch ein Wechsel zwischen drei oder mehr Sendeleistungsniveaus möglich. Andererseits muß der Wechsel der Sendeleistung nicht zwingend nach jedem Meßzyklus erfolgen. Beispielsweise kann es genügen, nach mehreren Meßzyklen mit konstanter Sendeleistung einen einzelnen Meßzyklus einzufügen, in dem die Sendeleistung herabgesetzt ist. Ebenso ist es auch möglich, die Detektionseinrichtung 32 zeitweise abzuschalten und nur in gewissen Intervallen zu aktivieren, wobei sie dann den Verstärker 18 so ansteuert, daß das System in einen speziellen Blindheitsmodus übergeht, in dem die Modulation und die Leistungsabsenkung des Sendesignals im Hinblick auf die Blindheitserkennung bzw. die Erkennung von diffusen Verlustverursachern optimiert sind.

Während im gezeigten Beispiel das Spektrum 26 ausgewertet wird, ist es in einer modifizierten Ausführungsform auch möglich, auf entsprechende Weise das in der Analog/Digital-Wandlerstufe 22 erhaltene Zeitsignal auszuwerten.

## Patentansprüche

1. Verfahren zur Detektion von Empfindlichkeitseinbußen eines FMCW-Radarortungsgerätes durch diffuse Verlustverursacher (30; 50), bei dem vom Radarortungsgerät ein Sendesignal emittiert wird, dessen Frequenz periodisch in aufeinanderfolgenden Modulationsrampen (34, 36, 34', 36') moduliert wird, und mindestens ein Leistungsmerkmal mindestens eines Frequenzanteils eines vom Radarortungsgerät empfangenen Signals ausgewertet wird, **dadurch gekennzeichnet, daß** die Leistung des Sendesignals zyklisch, jeweils nach Vollendung einer Modulationsrampe variiert wird und die Empfindlichkeitseinbuße anhand von Unterschieden in den Leistungßmerkmalen von Signalen bestimmt wird, die bei aufeinanderfolgenden Modulationsrampen (34, 34'; 36, 36') empfangen werden, wobei das mindestens eine Leistungsmerkmal eines der folgenden Merkmale ist: Signalleistung der von georteten Objekten erzeugten Radarechos, Rauschleistung, Verhältnis zwischen Signalleistung und Rauschleistung, Varianz des durch die Änderung der Sendeleistung verursachten Signalleistungsunterschieds.

2. Verfahren nach Anspruch 1, **dadurch gekennzeichnet, daß** die Leistungsmerkmale, die zur Detektion von Empfindlichkeitseinbußen ausgewertet werden, die Gesamt-Signalleistung $P_{tot1}$, $P_{tot2}$ umfassen.

3. Verfahren nach Anspruch 1 oder 2, **dadurch gekennzeichnet, daß** die Leistungsmerkmale, die zur Detektion von Empfindlichkeitseinbußen ausgewertet werden, die Signalleistung ($P_{S1}$, $P_{S2}$) und die Rauschleistung $P_{N1}$, $P_{N2}$ umfassen.

4. Verfahren nach Anspruch 2 oder 3, dadurch gegenzeichnet daß die Sendeleistung zwischen zwei Leistungsniveaus umgeschaltet wird und das Verhältnis b dieser Leistungsniveaus so gewählt wird, daß es von dem Verhältnis a der den beiden Leistungsniveaus entsprechenden Rauschleistungen $P_{N1}$, $P_{N2}$ verschieden ist.

5. Verfahren nach den Ansprüchen 2 und 4, **dadurch gekennzeichnet, daß** das Vorliegen einer Empfindlichkeitseinbuße daran erkannt wird, daß das Verhältnis $P_{tot1}/P_{tot2}$ nahe bei dem Verhältnis a liegt.

6. Verfahren nach Anspruch 5, **dadurch gekennzeichnet, daß** das Verhältnis $P_{tot1}/P_{tot2}$ in aufeinanderfolgenen Meßzyklen einer zeitlichen Filterung unterzogen wird.

7. Verfahren nach einem der vorstehenden Ansprüche, **dadurch gekennzeichnet, daß** für ein geortetes Objekt (52) der Signalleistungsunterschied ($\Delta P$) zwischen der Signalleistung bei hoher Sendeleistung und der Signalleistung bei niedriger Sendeleistung bestimmt wird und daß für aufeinanderfolgende Zyklen der Variation der Sendeleistung

die Varianz ($\sigma^2$) des Signalleistungsunterschieds als Maß für Empfindlichkeitseinbußen aufgrund von Niederschlag bestimmt wird.

8. Verfahren nach Anspruch 7, **dadurch gekennzeichnet, daß** die Varianzen ($\sigma^2$) in aufeinanderfolgenen Meßzyklen einer zeitlichen Filterung unterzogen werden.

**Claims**

1. Method for detecting losses of sensitivity of an FMCW radar locating device by means of diffuse causes of loss (30; 50), in which the radar locating device emits a transmission signal, the frequency of which is periodically modulated in successive modulation ramps (34, 36, 34', 36'), and at least one performance feature of at least one frequency component of a signal received from the radar locating device is evaluated, **characterized in that** the power of the transmission signal is varied cyclically, in each case after the completion of a modulation ramp, and the loss of sensitivity is determined using differences in the performance features of signals received during successive modulation ramps (34, 34'; 36, 36'), the at least one performance feature being one of the following features: signal power of the radar echoes produced by located objects, noise power, ratio between signal power and noise power, variance of the signal power difference caused by the change in the transmission power.

2. Method according to Claim 1, **characterized in that** the performance features which are evaluated in order to detect losses of sensitivity comprise the total signal power $P_{tot1}$, $P_{tot2}$.

3. Method according to Claim 1 or 2, **characterized in that** the performance features which are evaluated in order to detect losses of sensitivity comprise the signal power ($P_{S1}$, $P_{S2}$) and the noise power $P_{N1}$, $P_{N2}$.

4. Method according to Claim 2 or 3, **characterized in that** the transmission power is changed over between two power levels and the ratio b of these power levels is selected in such a manner that it is different from the ratio a of the noise powers $P_{N1}$, $P_{N2}$ corresponding to the two power levels.

5. Method according to Claims 2 and 4, **characterized in that** the presence of a loss of sensitivity is detected by virtue of the ratio $P_{tot1}/P_{tot2}$ being close to the ratio a.

6. Method according to Claim 5, **characterized in that** the ratio $P_{tot1}/P_{tot2}$ is subjected to temporal filtering in successive measurement cycles.

7. Method according to one of the preceding claims, **characterized in that** the signal power difference ($\Delta P$) between the signal power at a high transmission power and the signal power at a low transmission power is determined for a located object (52), and **in that** the variance ($\sigma^2$) of the signal power difference is determined as a measure of losses of sensitivity on account of precipitation for successive cycles of varying the transmission power.

8. Method according to Claim 7, **characterized in that** the variances ($\sigma^2$) are subjected to temporal filtering in successive measurement cycles.

**Revendications**

1. Procédé de détection des pertes de sensibilité d'un appareil de localisation à radar FMCW par des causes de perte diffuses (30 ; 50), avec lequel un signal d'émission est émis par l'appareil de localisation à radar, dont la fréquence est modulée périodiquement dans des rampes de modulation (34, 36, 34', 36') successives, et au moins une caractéristique de puissance d'au moins une part de fréquence d'un signal reçu par l'appareil de localisation à radar est interprétée, **caractérisé en ce que** la puissance du signal d'émission est soumise à une variation cyclique, à chaque fois après l'achèvement complet d'une rampe de modulation, et la perte de sensibilité est déterminée au moyen de différences dans les caractéristiques de puissance des signaux qui sont reçus lors des rampes de modulation (34, 34' ; 36, 36') successives, l'au moins une caractéristique de puissance étant l'une des caractéristiques suivantes : puissance du signal des échos radar générés par les objets localisés, puissance du bruit, rapport entre la puissance du signal et la puissance du bruit, variance de la différence de puissance du signal provoquée par la modification de la puissance d'émission.

**2.** Procédé selon la revendication 1, **caractérisé en ce que** les caractéristiques de puissance qui sont interprétées pour la détection des pertes de sensibilité comprennent la puissance totale du signal $P_{tot1}$, $P_{tot2}$.

**3.** Procédé selon la revendication 1 ou 2, **caractérisé en ce que** les caractéristiques de puissance qui sont interprétées pour la détection des pertes de sensibilité comprennent la puissance du signal ($P_{S1}$, $P_{S2}$) et la puissance du bruit $P_{N1}$, $P_{N2}$.

**4.** Procédé selon la revendication 2 ou 3, **caractérisé en ce que** la puissance d'émission est permutée entre deux niveaux de puissance et le rapport b de ces niveaux de puissance est choisi de telle sorte qu'il est différent du rapport a entre les puissances du bruit $P_{N1}$, $P_{N2}$ correspondant aux deux niveaux de puissance.

**5.** Procédé selon les revendications 2 et 4, **caractérisé en ce que** la présence d'une perte de sensibilité est détectée par le fait que le rapport $P_{tot1}/P_{tot2}$ est proche du rapport a.

**6.** Procédé selon la revendication 5, **caractérisé en ce que** le rapport $P_{tot1}/P_{tot2}$ est soumis à un filtrage dans le temps dans des cycles de mesure successifs.

**7.** Procédé selon l'une des revendications précédentes, **caractérisé en ce que** pour un objet (52) localisé, la différence de puissance du signal ($\Delta$P) entre la puissance du signal avec une puissance d'émission élevée et la puissance du signal avec une faible puissance d'émission est déterminée et **en ce que** pour les cycles successifs de la variation de la puissance d'émission, la variance ($\sigma^2$) de la différence de puissance du signal est déterminée en tant que mesure des pertes de sensibilité en raison des précipitations.

**8.** Procédé selon la revendication 7, **caractérisé en ce que** les variances ($\sigma^2$) sont soumises à un filtrage dans le temps dans des cycles de mesure successifs.

**Fig. 1**

f [GHz]

76,7

34    36    34'    36'

76,1

T    2T    3T    4T    t

## Fig. 2

I    II

P [dB]

0

-9    38

T    2T    3T    4T    t

## Fig. 3

Fig. 4

Fig. 5

**Fig. 6**

**Fig. 7**

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10048333 A
- DE 19945268 A1
- DE 102006054320 A1